# EUROPÄISCHE PATENTSCHRIFT

(11) **EP 4 387 830 B1**
(45) Veröffentlichungstag und Bekanntmachung des Hinweises auf die Patenterteilung: **04.06.2025**
(21) Anmeldenummer: 23736013.6
(22) Anmeldetag: 23.06.2023
(51) Int. Cl.: B29C 64/106, B29C 64/25, B33Y 30/00

(54) **ADDITIVE HERSTELLUNGSVORRICHTUNG**
ADDITIVE MANUFACTURING DEVICE
DISPOSITIF DE FABRICATION ADDITIVE

(30) Priorität: 29.06.2022 DE 102022116161
(43) Veröffentlichungstag der Anmeldung: 26.06.2024
(73) Patentinhaber: Arburg GmbH + Co KG, 72290 Loßburg (DE)
(72) Erfinder: LING, Andreas, 72270 Baiersbronn (DE); NEFF, Martin, 78730 Lauterbach (DE)
(74) Vertreter: RPK Patenanwälte Reinhardt und Kaufmann Partnerschaft mbB (Pforzheim)
(86) Internationale Anmeldenummer: PCT/EP2023/067204
(87) Internationale Veröffentlichungsnummer: WO 2024/002912

(56) Entgegenhaltungen:
- EP-A1- 1 886 793
- EP-B1- 2 720 854
- CN-A- 108 790 157
- DE-A1- 102016 111 218

## Beschreibung

Die vorliegende Erfindung betrifft eine Vorrichtung zur Herstellung wenigstens eines dreidimensionalen Objekts mittels additiver Fertigung mit den Merkmalen gemäß dem Oberbegriff des Anspruchs 1. Dabei wird das Objekt durch Austragen einer plastifizierbaren und/oder verfestigbaren Masse an diskreten Positionen in einem Bauraum hergestellt.

Die dem Oberbegriff des Anspruches 1 zugrundeliegende DE 10 2016 111 218 A1 zeigt eine Vorrichtung zum Mischen und Applizieren von reaktiven Kunststoffen, mit wenigstens zwei Dosiereinrichtungen und einem Mischkopf, in dem die Kunststoffkomponenten in einer Mischkammer miteinander gemischt werden, und mit einer der Mischkammer nachgeordneten Austragsdüse. Ein Werkstückträger, auf dem das Werkstück zur Applikation der Gießmasse anordenbar ist, wird mit einer Verstelleinrichtung angetrieben. Werkstückträger mit Verstelleinrichtung sind in einer Unterdruckkammer angeordnet, oberhalb der die Dosiereinrichtungen und der Mischkopf außerhalb der Unterdruckkammer angeordnet sind, wobei die Unterdruckkammer eine Ausnehmung zum Durchtritt der Gießmasse in die Unterdruckkammer aufweist.

Die EP 1 886 793 A1 beschreibt ein Verfahren und eine Vorrichtung, die zur Herstellung eines dreidimensionalen Gegenstandes in einem Bauraum unter sequentiellem Austragen von Tropfen dienen. Durch eine in der Spritzgießtechnik bekannte Plastifiziereinheit wird das verfestigbare Material zunächst zur Aufbereitung plastifiziert, also in eine fluide Phase überführt. Die Plastifiziereinheit ist als Fördereinheit an einen Materialspeicher zum Einbringen der fluiden Phase in den Materialspeicher angekoppelt. Auf das verfestigbare Material im Materialspeicher wird ein Druck erzeugt. Der Materialspeicher ist direkt an eine taktbare Austragseinheit aufgebracht. In Abhängigkeit der Parameter Druck und Temperatur im Materialspeicher als auch in Abhängigkeit von Öffnungszeit und Geometrie einer taktbaren Austragseinheit werden diskontinuierliche Tropfen mit gewünschtem Volumen und gewünschter Fluggeschwindigkeit in Richtung des Bauraumes erzeugt. Somit wird unter Verwendung kunststofftechnischer Ansätze ein alternatives Verfahren zur Herstellung eines dreidimensionalen Gegenstandes zur Verfügung gestellt.

Aus der WO 2012/171647 A1 ist eine Vorrichtung zur Herstellung eines dreidimensionalen Gegenstandes aus verfestigbarem Material bekannt, die einen Bauraum zum Aufbau des Gegenstandes, eine Temperiereinheit zur Temperierung des Bauraums und eine Aufbereitungseinheit zur Aufbereitung des verfestigbaren Materials in die fluide Phase aufweist. Eine Druckerzeugungseinheit erzeugt den Druck auf die in der Aufbereitungseinheit vorliegende fluide Phase. Eine Austragseinheit ist zum Austragen des verfestigbaren Materials durch eine Austrittsöffnung in Richtung auf den Bauraum in Form von Tropfen vorgesehen. Dadurch, dass der temperierbare Bauraum von einer Bauraumeinfassung umgeben ist, in der zumindest die Austrittsöffnung der Austragseinheit und die Aufbereitungseinheit sowie der Objektträger zur Herstellung des Gegenstands aufgenommen sind, wird eine energieoptimierte Temperierung zur Unterstützung der Materialverbindung am Gegenstand erreicht.

Bei diesen Dokumenten erscheint jedoch eine für eine homogene Herstellung eines Gegenstands mit guter Qualität gleichbleibende und homogene Temperierung des zu erzeugenden Gegenstandes dadurch erschwert, dass der zu erzeugende Gegenstand den unterschiedlichen Temperaturen zumindest von Teilen der Vorrichtung ausgesetzt ist, die seine eigene Temperatur direkt beeinflussen. Auch erschwert der Aufbau der Vorrichtung, in dem Teile der Vorrichtung direkt im Bauraum angeordnet sind, die Wartung und den Austausch einzelner Teile der Vorrichtung.

Die EP 2 329 935 A1 betrifft eine 3D-Modellierungsvorrichtung mit einer Kammer und einem darin in Z-Richtung bewegbaren Substratträger und einer quer zu dem Objektträger beweglichen Abgabeeinrichtung. Die Abgabeeinrichtung ist zumindest teilweise oberhalb des Bauraums angeordnet und reicht durch eine Öffnung an der Oberseite des Bauraums. Sie weist einen starr damit verbundenen Kartuschenvorrat und eine Abgabedüse zum Ausfördern von Modelliersubstanz auf den Substratträger auf. Der Abgabeeinrichtung ist eine Bewegungseinrichtung in Form eines Roboterarms zugeordnet und eine Steuerungseinrichtung zur Steuerung von Bewegungseinrichtung und Austragseinheit. An der Bewegungseinrichtung sind der Kartuschenvorrat und die Abgabeeinrichtung mit Abgabedüse befestigbar.

Die US 8 419 996 B2 offenbart eine Druckkopfanordnung zur Verwendung in einem Fused Deposition Modeling-System. Die Druckkopfanordnung umfasst ein Gehäuse mit einer Kammer mit einem darin angeordneten Formenträger, der in X-Y und optional in Z-Richtung bewegbar ist. Die Kammer weist an ihrer Oberseite eine Öffnung auf, durch die zwei Kartuscheneinheiten mit starr damit verbundenen Druckköpfen hindurchragen können. Die Kartuscheneinheiten und ggf. die Druckköpfe sind zumindest teilweise oberhalb der Kammer angeordnet und von einem Faltenbalg umgeben, der die Öffnung der Kammer gemeinsam mit den Kartuscheneinheiten und ggf. den Druckköpfen zumindest teilweise verschließt. Jede der Kartuscheneinheiten mit den Druckköpfen ist in X-Y-Z-Richtung bewegbar angeordnet.

Den beiden letztgenannten Dokumenten gemeinsam ist das Problem, dass eine flexible Veränderung des Bauraums von einer starren Integration von Massenaufbereitungseinheit, Austragseinheit mit Austragdüse in bzw. an den Bauraum mit dem Objektträger erschwert wird. Damit ist eine einfache Skalierbarkeit der Vorrichtung nicht ohne größere Umbaumaßnahmen an der gesamten Vorrichtung durchführbar.

Aus der EP 2 720 854 B1 ist eine Vorrichtung zur Herstellung eines dreidimensionalen Gegenstandes aus verfestigbarem Material durch sequentielles Austragen von Tropfen bekannt, wobei ein temperierbarer Bauraum zum Aufbau des Gegenstandes auf einem Objektträger vorgesehen ist. In einer Aufbereitungseinheit wird das verfestigbare Materials in die fluide Phase aufbereitet. Eine Druckerzeugungseinheit erzeugt Druck auf die in der Aufbereitungseinheit aufbereitete, fluide Phase. Eine Austragseinheit dients zum Austragen des verfestigbaren Materials durch eine Austrittsöffnung in Richtung auf den Bauraum in Form von Tropfen. Der Bauraum ist von einer Bauraumeinfassung umgeben ist, in der die Austrittsöffnung der Austragseinheit, die Aufbereitungseinheit sowie der Objektträger aufgenommen sind. In der Wandung der Bauraumeinfassung ist ein Isolierelement vorgesehen, das zwischen Aufbereitungseinheit und Druckerzeugungseinheit angeordnet ist und diese voneinander trennt.

Die CN 108790157 A offenbart ein Zweischicht-Schnellformsystem für umweltempfindliche Materialien mit einer Steuereinheit, einer Druckplattform, einem Kastengestell und zwei Sprüheinheiten. Jede Sprüheinheit umfasst einen Zufuhrmischmechanismus, einen Heizmechanismus und einen Extrusionsmechanismus. Jeder Mischmechanismus umfasst einen Zufuhrtrichter, einen Tonerkasten, ein Tonergebläse, eine Zufuhrtrennwand, ein Zufuhrrohr und eine Rührförderschneckenstange. Jeder Tonerkasten ist an der Seitenwand des entsprechenden Zuführtrichters installiert. Die Seite eines Auslasses jedes Tonerkastens steht mit dem Inneren des entsprechenden Zuführtrichters in Verbindung. Jedes Tonergebläses ist einem Lufteinlass des entsprechenden Tonerkastens zugewandt. Jeder Heizmechanismus ist innerhalb des entsprechenden Zuführtrichters und unterhalb des entsprechenden Tonerkastens angeordnet und umfasst eine Heizkammer, ein Auslassrohr, einen Temperatursensor und eine Heizung, die um die Heizkammer gewickelt ist.

Der Erfindung liegt daher die Aufgabe zugrunde, eine flexibel einsetzbare Vorrichtung zur homogenen Herstellung eines dreidimensionalen Objekts mit guter Qualität mittels additiver Fertigung bereitzustellen.

Diese Aufgabe wird mit einer Vorrichtung gemäß den Merkmalen des Patentanspruchs 1 gelöst.

Die Vorrichtung dient zur Herstellung wenigstens eines dreidimensionalen Objekts aus plastifizierbarer und/oder verfestigbarer Masse. Sie weist einen geschlossenen dreidimensionalen Bauraum mit einem darin angeordneten frei bewegbaren und rotierbaren Objektträger auf. Wenigstens eine Masseaufbereitungseinheit mit einer Austragseinheit ist zumindest teilweise oberhalb des Bauraums angeordnet. Grundsätzlich können auch mehrerer Masseaufbereitungseinheiten vorgesehen sein. Dabei weist der geschlossene Bauraum eine dreidimensionale räumliche Ausdehnung, also eine beliebige dreidimensionale räumliche Ausdehnung auf, wobei der Bauraum in einer oberen Verschlussebene wenigstens eine Öffnung aufweist, die durch wenigstens eine Austragsdüse der Austragseinheit zumindest teilweise verschließbar ist, und wobei die wenigstens eine Masseaufbereitungseinheit zumindest um eine erste Achse drehbar gelagert ist, die in der oder parallel zu der Ebene angeordnet ist.

Durch diese Vorrichtung wird vorteilhaft eine weitestgehende Trennung der wenigstens einen Masseaufbereitungseinheit vom Bauraum ermöglicht, die es erlaubt, die Größe des Bauraums in Abhängigkeit vom zu erzeugenden Objekt und unabhängig von der Masseaufbereitungseinheit beliebig zu variieren. Gleichzeitig kann jederzeit eine gleichbleibende und homogene Temperierung des Bauraums sichergestellt werden, wodurch auch Homogenität und Qualität des zu erzeugenden Objekts verbessert werden. Dies wird insbesondere dadurch ermöglicht, dass die Öffnung der oberen Verschlussebene durch die Austragsdüse der Austragseinheit während des Produktionsprozesses zumindest teilweise verschließbar ist. Dazu muss allerdings die Öffnung nicht vollumfänglich verschlossen werden. Es genügt, wenn die Austragsdüse zumindest teilweise in die Öffnung eintaucht oder an der Öffnung anliegt. Die Trennung von Masseaufbereitungseinheit und Bauraum erleichtert zudem vorteilhaft die Wartung und den Austausch einzelner Teile der Vorrichtung.

Dabei ist die Öffnung der oberen Verschlussebene nicht durch die Austragsdüse verschlossen, wenn die wenigstens eine Masseaufbereitungseinheit in einer Ruheposition ist, in der die wenigstens eine Masseaufbereitungseinheit in einer relativen 0 Grad Position ist, und ist durch die Austragsdüse zumindest teilweise verschlossen, wenn die wenigstens eine Masseaufbereitungseinheit in einer von der relativen 0 Grad Position der Ruheposition abweichenden Arbeitsposition ist. Vorteilhaft kann die Vorrichtung damit leicht vom Bauraum freigesetzt werden, so dass die Wartung sowohl der Vorrichtung als auch des Bauraums erleichtert wird. Zudem kann in der Ruheposition der Bauraum flexibel geändert oder durch einen anderen größeren oder kleineren Bauraum ersetzt werden.

Unter einer relativen 0 Grad Position wird dabei eine winkelmäßig beliebige Position verstanden, bei der es sich nicht um eine horizontale Position handeln muss, jedoch handeln kann. Damit wird lediglich die Ruheposition als 0 Grad Position definiert, von der ausgehend alle anderen Positionen eine dazu im Winkel stehende Position einnehmen.

Vorteilhafte Weiterbildungen sind Gegenstand der abhängigen Patentansprüche.

Die Vorrichtung weist vorzugsweise eine Fördereinheit auf, die mittels einer Spannvorrichtung lösbar an der Vorrichtung befestigt ist und zum Fördern und ggf. auch als Plastifiziereinheit zum Plastifizieren von vorzugsweise in fester Form vorliegender Masse eingerichtet ist. Dies erleichtert vorteilhaft Austausch und Wartung der Fördereinheit. Bevorzugt ist die Austragseinheit um eine Achse in der oder parallel zu der Ebene drehbar gelagert und dadurch gegenüber dem Rest der Vorrichtung verschwenkbar. Dadurch ist die Austragseinheit vorteilhaft leicht zugänglich, um Reinigungs- oder Wartungsarbeiten durchzuführen.

In einer bevorzugten Ausführungsform der Vorrichtung weist die wenigstens eine Masseaufbereitungseinheit eine Kraftmesseinrichtung auf, die in oder entlang einer Richtung einer Wirkungslinie einer Axialkraft angeordnet ist. Dadurch kann die Kraftmesseinrichtung 70 vorteilhaft z. B. direkt hinter einer Förderschneckenkupplung angeordnet sein. Diese Anordnung führt nicht nur zu einer Verringerung der Baugröße, es lässt sich dadurch vorteilhaft die Kraft präziser messen, weitestgehend ohne Störeinflüsse, die das Messergebnis verfälschen.

Vorzugsweise ist ein Materialaustragspunkt der Austragsdüse ortsfest an einer vorbestimmten x-y-z-Raumposition im oder am Bauraum vorgesehen, wenn die Materialaufbereitungseinheit in der Arbeitsposition ist. Dies gestattet vorteilhaft eine hohe Reproduzierbarkeit, was sich auf die Qualität der zu fertigenden Objekte positiv auswirkt.

Bevorzugt ist die vorbestimmte x-y-z-Raumposition des Materialaustragspunkts bei der Bewegung der wenigstens einen Masseaufbereitungseinheit aus der Ruheposition in die Arbeitsposition mittels einer wiederholbaren Positionsregelung ansteuerbar. Damit sind wiederholbare Verhältnisse bei der Produktion von Objekten vorteilhaft gewährleistet.

In einer bevorzugten, die homogene Herstellung eines dreidimensionalen Objekts mit guter Qualität verbessernden Ausführungsform der Vorrichtung ist die Positionsregelung eingerichtet, die Ansteuerung der x-y-z-Raumposition mittels eines festen mechanischen Anschlags als Referenzpunkt durchzuführen oder alternativ die Ansteuerung der x-y-z-Raumposition ausschließlich mittels einer Antriebssteuerung in Verbindung mit einem Antrieb zur Bewegung der wenigstens einen Masseaufbereitungseinheit und ohne die Verwendung eines Anschlags als Referenzpunkt durchzuführen. Auch dadurch kann vorteilhaft die Präzision der Randbedingungen und die Wiederholbarkeit der Ergebnisse sichergestellt werden.

In einer bevorzugten, die homogene Herstellung eines dreidimensionalen Objekts mit guter Qualität sowie die gleichbleibende und homogene Temperierung des zu erzeugenden Objekts verbessernden Ausführungsform der Vorrichtung ist eine Positionsverschiebung der Austragseinheit in der Ebene bei einer Drehung der wenigstens einen Masseaufbereitungseinheit durch eine Vorrichtungssteuerung ausgleichbar. Damit wird vorteilhaft sichergestellt, dass auch nach einem Überführen der Austrageinheit in eine Ruheposition, bei ihrer Rückstellung in die Arbeitsposition der gleiche Arbeitspunkt wieder eingenommen werden kann.

Bevorzugterweise ist eine prozessbedingte Längenänderung eines Teils oder mehrerer Teile der Masseaufbereitungseinheit infolge thermischer und/oder elastostatischer Effekte durch eine schwimmende Lagerung, wie z. B. ein Gleit- oder Wälzlager, insbesondere ein Walzen- oder Kugellager, des Teils oder der Teile kompensierbar. Bei diesen Teilen handelt es sich vorzugsweise um die Austragseinheit und die Fördereinheit. Derartige Effekte bleiben dadurch vorteilhaft weitestgehend ohne Einfluss auf die Fertigung der Objekte, so dass vom ersten bis zum letzten Teil vergleichbare Herstellungsbedingungen eingehalten werden können.

Vorzugsweise ist eine prozessbedingte Längenänderung des Schwenkrahmens, der mit dem Hauptrahmen an einer zweiten Achse verbunden ist, auch mittels einer Temperierung des Schwenkrahmens vermeidbar. Ein eventuell in den Schwenkrahmen erfolgender Wärmeeintrag hat damit vorteilhaft keine Auswirkung auf die Lage des Materialaustragspunkts, so dass eine Verschiebung des Materialaustragspunktes verhindert wird.

Bevorzugt weisen bei einer Anordnung mehrerer Masseaufbereitungseinheiten nebeneinander deren Austragsdüsen relativ zueinander minimierte, also auf den geringsten bzw. geringstmöglichen Wert festgelegte, Abstände auf, indem z.B. nur die Austragsdüsen aufeinander zu zeigen. Dadurch lassen sich vorteilhaft auf engem Raum auch mehrere Austragseinheiten anordnen.

Grundsätzlich kann zur vorteilhaften Steigerung der Produktivität der Vorrichtung die Vorrichtung vorzugsweise mehrere geschlossene dreidimensionale Bauräume aufweisen, die gleichzeitig von der Vorrichtung bedient werden.

In einer vorteilhaft die Produktivität der Vorrichtung verbessernden Ausführungsform der Vorrichtung umfasst der geschlossene dreidimensionale Bauraum vorzugswiese mehrere Objektträger, um dadurch z.B. mehrere Objekte gleichzeitig zu fertigen.

Ebenso können zur vorteilhaften Steigerung der Produktivität der Vorrichtung mehrere Masseaufbereitungseinheiten gleichzeitig oder zeitversetzt plastifizierte Masse auf den Objektträger austragen.

Die Erfindung wird nun anhand eines in den beigefügten Figuren gezeigten Ausführungsbeispiels näher erläutert. Es zeigen:
- Fig. 1: eine Seitenansicht einer erfindungsgemäßen Vorrichtung in Ruheposition,
- Fig. 2: eine Seitenansicht einer erfindungsgemäßen Vorrichtung in Arbeitsposition,
- Fig. 3: eine Seitenansicht einer erfindungsgemäßen Vorrichtung mit einer um eine Achse verschwenkten Austragseinheit.

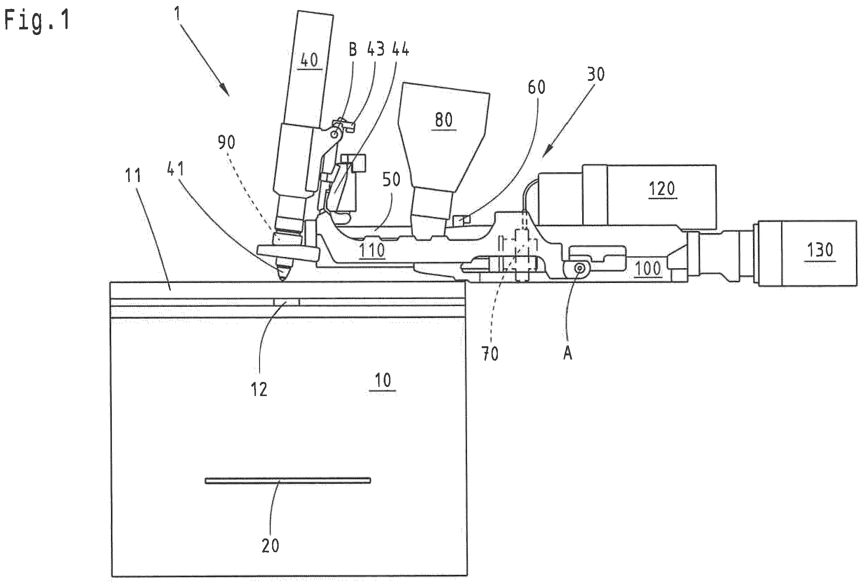

Fig. 1 zeigt eine Vorrichtung 1 zur Herstellung wenigstens eines dreidimensionalen Objekts aus plastifizierbarer und/oder verfestigbarer Masse in einer Ruheposition, umfassend einen geschlossenen dreidimensionalen Bauraum 10 mit sich in einer Ebene erstreckenden x- und y-Koordinatenachsen - im Folgenden auch x-y Ebene - sowie einer sich in einer 90° Richtung zu der Ebene erstreckenden z-Koordinatenachse zum Aufbau des Objekts. Im Bauraum ist wenigstens ein darin angeordneter, in allen drei Raumrichtungen frei bewegbarer und rotierbarer Objektträger 20 vorgesehen. Eine Masseaufbereitungseinheit 30 weist eine Austragseinheit 40 auf, die zum Austragen plastifizierter Masse eingerichtet ist, wobei die wenigstens eine Masseaufbereitungseinheit 30 zumindest teilweise oberhalb des Bauraums 10 angeordnet ist. Dabei weist der geschlossene Bauraum 10 eine beliebige dreidimensionale räumliche Ausdehnung auf, wobei der Bauraum 10 in einer oberen Verschlussebene 11 wenigstens eine Öffnung 12 aufweist, die durch wenigstens eine Austragsdüse 41 der Austragseinheit 40 zumindest teilweise verschließbar ist. Ein vollständiger Verschluss der Öffnung 12 kann zwar für ein thermisches Gleichgewicht im Bauraum von Vorteil sein, ist aber nicht unbedingt erforderlich. Es genügt, wenn die Austragsdüse zumindest teilweise in die Öffnung eintaucht oder an der Öffnung anliegt.

Die damit ermöglichte Trennung der wenigstens einen Masseaufbereitungseinheit 30 vom Bauraum 10 erlaubt vorteilhaft, die Größe des Bauraums in Abhängigkeit vom zu erzeugenden Objekt und unabhängig von der Masseaufbereitungseinheit 30 beliebig zu variieren, so dass der Bauraum 10 beliebig erweiterbar oder anpassbar ist.

Die wenigstens eine Masseaufbereitungseinheit 30 ist zumindest um eine erste Achse A in der oder parallel zu der Ebene drehbar gelagert. Diese Achse A ist vorzugsweise gleichzeitig ein Anbindungspunkt an ein zeichnerisch nicht dargestelltes Maschinengestell. Grundsätzlich können auch mehrere Masseaufbereitungseinheiten nebeneinander angeordnet und/oder gleichzeitig betrieben werden.

Der Begriff "plastifizierbare Masse" ist dabei weit zu verstehen und umfasst insbesondere, aber nicht nur, neben Kunststoffen oder auch Silikon oder anderen thermoplastischen und/oder elastomeren Werkstoffen z.B. keramische, metallische und/oder pulverige Massen ebenso wie Papier, Cellulose, Stärke, Kork, usw. sowie auch Mischmaterialen zwischen derartigen plastifizierbaren Materialien. Grundsätzlich kann es sich dabei auch um bereits zuvor plastifizierte Materialien oder auch plastische Massen handeln, die nach dem Ausbringen selbsttätig oder unter Einsatz von Hilfsmitteln aushärten. Grundsätzlich können auch Recyclate verwendet werden.

Vorzugsweise kann die Masse mit einem regelbaren oder einstellbaren Massevolumen z.B. tropfenförmig oder auch strangförmig zur Herstellung des wenigstens einen Objekts ausgetragen werden.

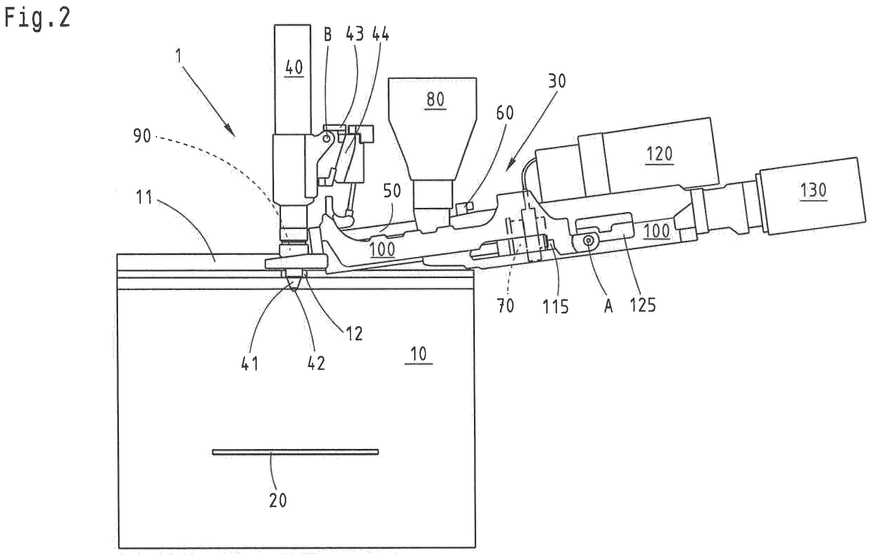

Die Öffnung 12 der oberen Verschlussebene 11 ist dann nicht durch die Austragsdüse 41 verschlossen, wenn die wenigstens eine Masseaufbereitungseinheit 30 in einer Ruheposition ist, in der sich die wenigstens eine Masseaufbereitungseinheit 30 in einer relativen 0 Grad Position befindet, und ist durch die Austragsdüse 41 zumindest teilweise verschlossen, wenn die wenigstens eine Masseaufbereitungseinheit 30 in einer von der relativen 0 Grad Position der Ruheposition abweichenden Arbeitsposition ist. Fig. 2 zeigt die Vorrichtung 1 in der Arbeitsposition. Durch diesen Aufbau ist eine leichte Wartbarkeit aller Teile der Vorrichtung, wie insbesondere der Austragseinheit 40, einer Fördereinheit 50, die zum Fördern einer plastifizierbaren und/oder verfestigbaren Masse eingerichtet ist, oder der wenigstens einen Masseaufbereitungseinheit 30 sowie des Bauraums 10 und des Objektträgers 20 ermöglicht und gleichzeitig dient die Absenkbarkeit der Austragsdüse 41 dem zumindest teilweisen Verschluss des Bauraums 10, durch den die oben genannten weiteren Vorteile erst möglich sind, wie z.B. auch eine gezielte Regelung und Beeinflussung einer Bauraumtemperatur.

Unter einer relativen 0 Grad Position wird dabei eine winkelmäßig beliebige Position verstanden, bei der es sich nicht um eine horizontale Position handeln muss, jedoch handeln kann. Damit wird lediglich die Ruheposition als 0 Grad Position definiert, von der ausgehend alle anderen Positionen einen dazu im Winkel stehende Position einnehmen.

Die Fördereinheit 50 ist im Ausführungsbeispiel als Plastifiziereinheit ausgebildet und dafür eingerichtet, plastifizierbare Materialen kontinuierlich oder diskontinuierlich zu plastifizieren und/oder zu fördern. Grundsätzlich kann die Fördereinheit aber auch nur zum Fördern von Material wie z.B. bei der Silikonverarbeitung eingerichtet sein. In diesem Fall kann eine in der Fördereinheit 50 aufgenommene Förderschnecke durch ein einfaches Kolben-Zylindersystem als Fördermittel ersetzt werden. Zur Druckerzeugung können eine Schnecke oder andere Druckerzeugungseinheiten z.B. Kolben verwendet werden.

Grundsätzlich kann die wenigstens eine Masseaufbereitungseinheit 30 je nach Einsatzbereich einen rotativ wirkenden Drehantrieb 120 und/oder einen axial wirkenden Axialantrieb 130 aufweisen. Der Drehantrieb 120 ist dazu eingerichtet, eine radiale Bewegung eines Fördermittels wie einer Förderschnecke zu bewirken, um dadurch Material zu fördern, zu plastifizieren und zu homogenisieren. Der Axialantrieb ist dazu eingerichtet, eine axiale Bewegung eines Fördermittels zu bewirken, wie z.B. eine axiale Bewegung einer Förderschnecke, insbesondere aber, um durch die Axialbewegung einen Druck zu erzeugen. Beide Antriebe werden für insbesondere für eine diskontinuierliche Masseaufbereitung benötigt. Bei einer kontinuierlichen Masseaufbereitung wie einer reinen Extrusion ist nur ein Drehantrieb 120 erforderlich, für z.B. Silikone ist nur ein Axialantrieb 130 erforderlich. Die wenigstens eine Masseaufbereitungseinheit kann daher entweder den Drehantrieb 120 oder den Axialantrieb 130 oder eine Kombination von beiden umfassen.

Die Teile der Masseaufbereitungseinheit 30 können in einem Hauptrahmen 100 und einem Schwenkrahmen 110 gelagert sein. Der Hauptrahmen 100 lagert insbesondere den Drehantrieb 120, einen Axialantrieb 130 und einen Vorratsbehälter 80 zur Bevorratung von vorzugsweise in fester Form, ggf. aber auch bereits in verflüssigter oder flüssiger Form, vorliegender plastifizierbarer und/oder verfestigbarer Masse sowie die Fördereinheit 50. Der Schwenkrahmen 110 lagert die Austragseinheit 40.

Der Hauptrahmen 100 ist dabei vorzugsweise ein Übertragungselement für die Axialkraft des Axialantriebs 130 und Gegenlager für das aufgebrachte Dosiermoment. Er dient als zentrales Bauteil, um die Fördereinheit 50, Axialantrieb 130 und/oder Drehantrieb 120 und Vorratsbehälter 80 in der notwendigen Präzision miteinander zu verbinden. Der Schwenkrahmen ist vorzugsweise das zentrale Lagerelement für die gesamte Masseaufbereitungseinheit 30 und erfährt keine Betriebskräfte (keine Axialkraft, kein Dosiermoment). Er verbindet die Gesamteinheit "nur" mit dem Maschinengestell, ermöglicht die Schwenkbewegung der sonst starr verbundenen Masseaufbereitungseinheit sowie die Längenkompensation (thermisch und axialkraftbedingt).

In einer vorteilhaften, die Wartung und den Austausch einzelner Teile der Vorrichtung 1 erleichternden Ausführungsform der Vorrichtung 1 kann die Fördereinheit 50 mittels einer Spannvorrichtung 60 lösbar an der Vorrichtung und insbesondere am Hauptrahmen 100 befestigt sein. Dies ermöglicht eine leichte Entnahme der Fördereinheit 50 zu Wartungszwecken, also z. B. zur Reinigung oder zum Tausch einzelner Teile wie beispielsweise einer Förderschnecke oder eines anderen Förderelements. Es ermöglicht aber auch den vollständigen Austausch der Fördereinheit 50. Die Spannvorrichtung 60 arbeitet mit einer reproduzierbar aufbringbaren hohen Vorspannkraft und mit einer im Verhältnis zur Vorspannkraft geringen Bedienkraft. Vorzugsweise ist die Vorspannkraft des Zylinders der Fördereinheit 50 so hoch, dass der Zylinder unter Einfluss von Wärme und Axialkraft nicht abhebt.

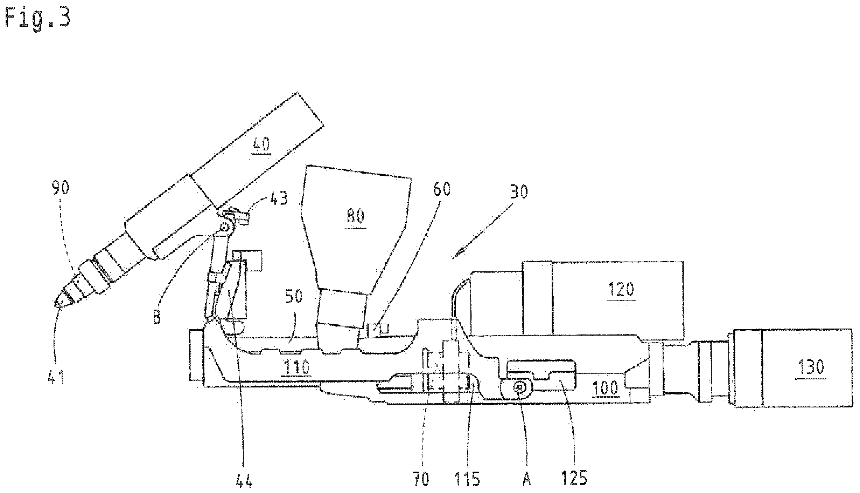

In einer vorteilhaften, die Wartung und den Austausch einzelner Teile der Vorrichtung 1 erleichternden Ausführungsform der Vorrichtung 1 kann die Austragseinheit 40 um eine zweite Achse B in der oder parallel zu der x-y Ebene drehbar gelagert sein. Zur Vereinfachung z. B. des Austauschs der Fördereinheit 50 oder auch zur Wartung der Austragseinheit 40 selbst kann die Austragseinheit40 einfach gemäß Fig. 3 nach oben verschwenkt werden.

Vorzugsweise kann die wenigstens eine Masseaufbereitungseinheit 30 eine Kraftmesseinrichtung 70 in bzw. vorzugsweise entlang einer Richtung einer Wirkungslinie einer Axialkraft aufweisen. Dabei wird abweichend von bisherigen Kraftmessverfahren nur eine Kraftmesseinrichtung 70 verwendet, welche die Kraft in Einspritzrichtung bzw. in axialer Richtung der wenigstens einen Masseaufbereitungseinheit misst, anstelle von bisher zwei Kraftmesseinrichtungen, welche versetzt zur Wirkungslinie der Kraft zwei Kräfte messen. Die Kraftmesseinrichtung 70 kann z.B. direkt hinter einer Förderschneckenkupplung angeordnet sein. Dadurch wird die Kraft vorteilhaft präziser gemessen, weitestgehend ohne Störeinflüsse, die das Messergebnis verfälschen. Vorteilhaft wird so auch die Baugröße reduziert.

Gemessen wird mit der Kraftmesseinrichtung 70 vorzugsweise die Axialkraft und daraus wird ein Massedruck errechnet (p=F/A), der als bevorzugte Regelgröße in den Herstellungsprozess Eingang findet.

In einer bevorzugten Ausführungsform der Vorrichtung 1 kann ein Materialaustragspunkt 42 der Austragsdüse 41 ortsfest an einer vorbestimmten x-y-z-Raumposition im Bauraum 10 sein, wenn die Materialaufbereitungseinheit 30 in der Arbeitsposition ist. Dies erleichtert die Abstandseinstellung in Verbindung mit dem Objektträger 20.

Vorzugsweise kann die vorbestimmte x-y-z-Raumposition des Materialaustragspunkts 42 bei der Bewegung der wenigstens einen Masseaufbereitungseinheit 30 aus der Ruheposition in die Arbeitsposition mittels einer wiederholbaren Positionsregelung ansteuerbar sein. Infolge der Bewegbarkeit der wenigstens einen Masseaufbereitungseinheit 30, insbesondere der Austragseinheit 40 und deren Austragsdüse 41 ist es von Vorteil, dass die x-y-z-Raumposition jederzeit reproduzierbar exakt ansteuerbar ist. Dies ermöglicht z. B. auch eine Längenausdehnungskompensation der Austragsdüse 41 und/oder eine Realisierung unterschiedlicher Schichtdicken der ausgetragenen Masse während des Produktionsprozesses.

Hinsichtlich der Austragsdüse gibt es grundsätzlich zwei Möglichkeiten, die thermische Längenänderung zu kompensieren und somit die Austragspunkte der betriebswarmen Maschine auf ein einheitliches Niveau (Z-Position) zu setzen. Das Prinzip ist in beiden Fällen dasselbe.

Die thermische Längenänderung ist bekannt, da Düsentemperatur und Ausdehnungskoeffizient des Düsenwerkstoffes bekannt sind. Die Kompensation kann dann erfolgen durch:
1. mechanische Höheneinstellung
   Sind die Betriebstemperaturen der Maschine bereits vorab bekannt und bleiben konstant, kann das bereits bei der Vorbereitung der Maschine durch einen unterschiedlichen Z-Offset (Abstand Austragsdüse 41 zu Objektträger 20) der Materialaustragspunkte 42 berücksichtigt werden.
2. die Abhebeeinrichtung 44

Die Abhebeeinrichtung 44 der Masseaufbereitungseinheit 30 ist präzise regelbar und kann die Materialaustragspunkte 42 abhängig von der Betriebstemperatur auf gewünschte Z-Positionen bringen. Dies bietet die Möglichkeit auf unterschiedlichste Materialprofil/Verarbeitungstemperaturen zu reagieren.

Bevorzugt ist die Positionsregelung eingerichtet, die Ansteuerung der x-y-z-Raumposition mittels eines festen mechanischen Anschlags 43 als Referenzpunkt durchzuführen. Dies ermöglicht z. B. auch ein einfaches Kalibrieren der z-Raumposition durch eine manuelle Höheneinstellung mittels einer Abhebeeinrichtung 44.

Alternativ ist die Positionsregelung vorzugsweise dazu eingerichtet, die Ansteuerung der x-y-z-Raumposition ausschließlich mittels einer Antriebssteuerung in Verbindung mit einem Antrieb zur Bewegung der wenigstens einen Masseaufbereitungseinheit 30 und ohne die Verwendung eines Anschlags 43 als Referenzpunkt durchzuführen. In dem Fall, dass im Wesentlichen die z-Raumposition geregelt werden muss, wird die Positionsregelung von der Antriebssteuerung in Verbindung mit dem Antrieb der Abhebeeinrichtung 44 durchgeführt.

In einer weiteren Ausführungsform ist vorzugsweise eine Positionsverschiebung der Austragseinheit 40 in der x-y Ebene bei Drehung der wenigstens einen Masseaufbereitungseinheit 30 durch eine Vorrichtungssteuerung ausgleichbar. Dies verhindert eine Positionsverschiebung der Austragsdüse 41 und gewährleistet eine hohe Prozessstabilität unabhängig von spezifischen Produktionsprozessparametern.

Bedarfsweise kann eine prozessbedingte Längenänderung eines oder mehrerer Teile der Masseaufbereitungseinheit 30, wie insbesondere der Austragseinheit 40 und/oder der Fördereinheit 50, infolge thermischer und/oder elastostatischer Effekte durch eine schwimmende Lagerung des Teils oder der Teile kompensierbar sein. Dazu sind sowohl am Hauptrahmen 100 als auch am Schwenkrahmen 110 jeweils entsprechende Linearlager 115 vorgesehen, die dazu geeignet sind, Längenänderungen der Teile der Masseaufbereitungseinheit 30, wie insbesondere der Austragseinheit 40 und/oder der Fördereinheit 50, die aufgrund thermischer und/oder elastostatischer Effekte der Teile entstehen, zu kompensieren. Im Ausführungsbeispiel kann sich damit sinngemäß die Fördereinheit 50 und der Rest der Vorrichtung von der Austragseinheit 40 wegbewegen. In der Praxis werden für eine schwimmende Lagerung neben den Linearlagern bzw. Linearkugellagern in der Regel auch Rillenkugellager, Pendelrollenlager oder Zylinderrollenlager verwendet.

Im Ausführungsbeispiel werden nur Längenänderungen der Fördereinheit 50 durch die Linearlager 115 aufgenommen. Die Längenänderungen der Austragseinheit 40 wirken aufgrund ihres Aufbaus in vertikaler Richtung und können über die Lagerung in der zweiten Achse B aufgenommen werden. All dies verhindert zusätzlich eine Positionsverschiebung der Austragsdüse 41 und gewährleistet eine hohe Prozessstabilität unabhängig von spezifischen Produktionsprozessparametern.

Das Linearlager 125 dient zur linearen Führung des Drehantriebs 120 bei Fahrbewegungen, die durch den Axialantrieb 130 erzeugt werden und bei denen plastifiziertes Material in den Massespeicher 90 gefördert wird.

In einer vorteilhaften Ausführungsform der Vorrichtung 1 ist eine prozessbedingte Längenänderung des Schwenkrahmens 110, der mit dem Hauptrahmen 100 an der ersten Achse A verbunden ist, auch mittels einer Temperierung des Schwenkrahmens 110 vermeidbar. Der Schwenkrahmen 110 befindet sich in der Regel in unmittelbarer Nähe des ggf. beheizten Zylinders der Fördereinheit 50 sowie direkt oberhalb des beheizten Bauraums 10. Dadurch erfolgt ein erheblicher Wärmeeintrag in den Schwenkrahmen 110. Dieser hat aber die zentrale Aufgabe, den Materialaustragspunkt 42 in einer festen Position zu halten, und soll möglichst keine Verschiebungen erfahren. Der Schwenkrahmen 110 ist hierzu an der ersten Achse A mit einem zeichnerisch nicht dargestellten Maschinengestell verbunden und dort fest gelagert. Folglich würden alle thermisch bedingten Längenänderungen des Schwenkrahmens 110 in Richtung des Materialaustragspunktes 42 gehen und diesen verschieben. Durch die Temperierung wird dieser Effekt unterbunden und die Verschiebung des Materialaustragspunktes verhindert.

Sind mehrere Masseaufbereitungseinheiten 30 nebeneinander vorgesehen, können diese so angeordnet werden, dass ihre Austragsdüsen 41 minimierte, also auf den geringsten bzw. geringstmöglichen Wert festgelegte, Abstände zueinander aufweisen. Denkbar ist z.B. eine Anordnung im Kreis, so dass der Abstand der Austragsdüsen zueinander geringer ist als der der Materialaufbereitungseinheiten. Ebenso sind auch andere Anordnungen möglich in einer beliebigen und vorteilhaften Winkelstellung Dadurch kann zugleich mit gegebenem Verfahrweg des Objektträgers 20 ein größerer Bereich mit den Austragsdüsen 41 erreicht werden.

Bei mehreren Austragsdüsen 41 können im Bauprozess die nicht aktiven Düsen minimal von der Arbeitsposition abgehoben werden, so dass sie sich nicht in der 0 Grad Position befinden. In diesem Fall befindet sich nur die aktive Düse auf Arbeitsposition, während die anderen Austragsdüsen vorteilhaft vom Bauraum 10 abgehoben und getrennt sind.

Um in einer bevorzugten Ausführungsform die Produktivität der Vorrichtung 1 zu steigern, kann die Vorrichtung 1 mehrere geschlossene dreidimensionale Bauräume 10 umfassen. Dadurch ist es möglich, mehrere ggf. auch verschiedenartige Bauaufträge gleichzeitig durchzuführen.

Ebenso ist es zur Steigerung der Produktivität möglich, dass der geschlossene dreidimensionale Bauraum 10 mehrere Objektträger 20 umfasst. Auch dadurch ist es möglich, mehrere Bauaufträge gleichzeitig zu fertigen.

Grundsätzlich können vorzugsweise auch mehrere Masseaufbereitungseinheiten 30 gleichzeitig oder auch zeitversetzt plastifizierte Masse auf den Objektträger 20 austragen. Dies ermöglicht eine Vervielfachung der Baugeschwindigkeit.

Die wenigstens eine Masseaufbereitungseinheit 30 kann durch die Anordnung ihrer Teile, wie insbesondere der Austragseinheit 40 und/oder der Fördereinheit 50, bzw. deren Teile kompakter, also gewichts- und platzreduzierter, aufgebaut werden. So ist z. B. der Drehantrieb 120 nach oben abgesetzt und geht somit nicht in die Länge der Masseaufbereitungseinheit 30 ein. Im Einspritzstrang sind Axialantrieb 130 und Kraftübertragungselement hintereinander angeordnet und können somit sehr schlank bauen.

Durch kleinere, schlankere Bauteile und die quasi orthogonale Stellung der Fördereinheit 50 (bzw. Schrägstellung der Masseaufbereitungseinheit 30) gegenüber der quasi vertikal stehenden Austragseinheit 40 bleibt der Materialaustragspunkt 42 der tiefste Punkt im Gesamtsystem und ermöglich theoretisch eine unendliche Vergrößerung der Bauraumgröße.

Bei einem Gewichtsvergleich des neuartigen Aufbaus mit bisherigen Masseaufbereitungseinheiten 30 kann das Gewicht vorteilhaft auf ca. ein Drittel des bisherigen Gewichts reduziert werden.

Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

### Bezugszeichenliste

- 1: Vorrichtung
- 10: Bauraum
- 11: Verschlussebene
- 12: Öffnung
- 20: Objektträger
- 30: Masseaufbereitungseinheit
- 40: Austragseinheit
- 41: Austragsdüse
- 42: Materialaustragspunkt
- 43: Anschlag
- 44: Abhebeeinrichtung
- 50: Fördereinheit
- 60: Spannvorrichtung
- 70: Kraftmesseinrichtung
- 80: Vorratsbehälter
- 90: Massespeicher
- 100: Hauptrahmen
- 110: Schwenkrahmen"
- 115: Linearlagerung
- 120: Drehantrieb
- 125: Linearlagerung
- 130: Axialantrieb
- A: erste Achse
- B: zweite Achse

## Patentansprüche

1. Vorrichtung (1) zur Herstellung wenigstens eines dreidimensionalen Objekts aus plastifizierbarer und/oder verfestigbarer Masse, umfassend
- einen geschlossenen dreidimensionalen Bauraum (10) mit sich in einer Ebene erstreckenden x- und y-Koordinatenachsen sowie einer sich in einer 90° Richtung zu der Ebene erstreckenden z-Koordinatenachse zum Aufbau des Objekts, umfassend einen darin angeordneten, frei bewegbaren Objektträger (20),
- wenigstens eine Masseaufbereitungseinheit (30), umfassend eine Austragseinheit (40), die zum Austragen plastifizierter Masse eingerichtet ist,
wobei die Masseaufbereitungseinheit (30) zumindest teilweise oberhalb des Bauraums (10) angeordnet ist,
wobei der geschlossene Bauraum (10) eine dreidimensionale räumliche Ausdehnung aufweist und in einer oberen Verschlussebene (11) wenigstens eine Öffnung (12) aufweist, die durch wenigstens eine Austragsdüse (41) der Austragseinheit (40) zumindest teilweise verschließbar ist,
**dadurch gekennzeichnet,**
**dass** der Objektträger (20) auch frei rotierbar ist,
**dass** die wenigstens eine Masseaufbereitungseinheit (30) zumindest um eine erste Achse (A) drehbar gelagert ist, die in der oder parallel zu der Ebene angeordnet ist und dazu konfiguriert ist, durch eine Drehung die wenigstens eine Masseaufbereitungseinheit (30) vom Bauraum (10) zu trennen,
**dass** die Öffnung (12) der oberen Verschlussebene (11) nicht durch die Austragsdüse (41) verschlossen ist, wenn die wenigstens eine Masseaufbereitungseinheit (30) in einer Ruheposition ist, in der die wenigstens eine Masseaufbereitungseinheit (30) in einer relativen 0 Grad Position ist, bei der es sich um eine winkelmäßig beliebige Position handelt, von der ausgehend alle anderen Positionen einen dazu im Winkel stehende Position einnehmen, und
**dass** die Öffnung (12) der oberen Verschlussebene (11) durch die Austragsdüse (41) zumindest teilweise verschlossen ist, wenn die wenigstens eine Masseaufbereitungseinheit (30) in einer von der relativen 0 Grad Position der Ruheposition abweichenden Arbeitsposition ist.

2. Vorrichtung nach Anspruch 1, **dadurch gekennzeichnet, dass** sie eine Fördereinheit (50) aufweist, die mittels einer Spannvorrichtung (60) lösbar befestigt ist und die zum Plastifizieren von vorzugsweise in fester Form vorliegender Masse eingerichtet ist,

3. Vorrichtung nach Anspruch 1 oder 2, **dadurch gekennzeichnet, dass** die Austragseinheit (40) um eine zweite Achse (B) drehbar gelagert ist, die in der oder parallel zu der Ebene angeordnet ist.

4. Vorrichtung nach einem der vorhergehenden Ansprüche, **dadurch gekennzeichnet, dass** die wenigstens eine Masseaufbereitungseinheit (30) eine Kraftmesseinrichtung (70) aufweist, die in einer Wirkungslinie einer Axialkraft angeordnet ist.

5. Vorrichtung nach einem der vorhergehenden Ansprüche, **dadurch gekennzeichnet, dass** ein Materialaustragspunkt (42) der Austragsdüse (41) ortsfest an einer vorbestimmten x-y-z-Raumposition im oder am Bauraum (10) angeordnet ist, wenn die wenigstens eine Materialaufbereitungseinheit (30) in der Arbeitsposition ist.

6. Vorrichtung nach Anspruch 5, **dadurch gekennzeichnet, dass** die vorbestimmte x-y-z-Raumposition des Materialaustragspunkts (42) bei einer Bewegung der wenigstens einen Masseaufbereitungseinheit (30) aus der Ruheposition in die Arbeitsposition mittels einer wiederholbaren Positionsregelung ansteuerbar ist.

7. Vorrichtung nach Anspruch 6, **dadurch gekennzeichnet, dass** die Positionsregelung eingerichtet ist, die Ansteuerung der x-y-z-Raumposition mittels eines festen mechanischen Anschlags (43) als Referenzpunkt durchzuführen oder die Ansteuerung der x-y-z-Raumposition ausschließlich mittels einer Antriebssteuerung in Verbindung mit einem Antrieb zur Bewegung der wenigstens einen Masseaufbereitungseinheit (30) durchzuführen.

8. Vorrichtung nach einem der vorhergehenden Ansprüche, **dadurch gekennzeichnet, dass** eine prozessbedingte Längenänderung eines oder mehrerer Teile der wenigstens einen Masseaufbereitungseinheit (30) infolge thermischer und/oder elastostatischer Effekte durch eine schwimmende Lagerung des oder der Teile kompensierbar ist.

9. Vorrichtung nach einem der vorhergehenden Ansprüche, **dadurch gekennzeichnet, dass** bei einer Anordnung mehrerer Masseaufbereitungseinheiten (30) nebeneinander deren Austragsdüsen (41) relativ zueinander minimierte Abstände aufweisen.

10. Vorrichtung nach einem der vorhergehenden Ansprüche, **dadurch gekennzeichnet, dass** die Vorrichtung (1) mehrere geschlossene dreidimensionale Bauräume (10) umfasst.

11. Vorrichtung nach einem der vorhergehenden Ansprüche, **dadurch gekennzeichnet, dass** der geschlossene dreidimensionale Bauraum (10) mehrere Objektträger (20) umfasst.

12. Vorrichtung nach einem der vorhergehenden Ansprüche, **dadurch gekennzeichnet, dass** mehrere Masseaufbereitungseinheiten (30) vorgesehen sind, die dazu eingerichtet sind, gleichzeitig oder zeitversetzt plastifizierte Masse auf den oder die Objektträger (20) auszutragen.

## Claims

1. A device (1) for manufacturing at least one three-dimensional article from a plasticisable and/or solidifiable composition, comprising
- a closed three-dimensional construction chamber (10) having x and y coordinate axes extending within a plane, and a z coordinate axis extending in a direction 90° to the plane, for building up the article, comprising an article support (20) that is arranged therein and is freely movable,
- at least one composition preparation unit (30) comprising a discharge unit (40) which is configured for discharging plasticised composition,
wherein the composition preparation unit (30) is arranged at least in part above the construction chamber (10),
wherein the closed construction chamber (10) has a three-dimensional spatial extent and, in an upper closure plane (11), at least one opening (12) that is at least partly closable by at least one discharge nozzle (41) of the discharge unit (40),
**characterised**
**in that** the article support (20) is also freely rotatable,
**in that** the at least one composition preparation unit (30) is mounted to be rotatable at least about a first axis (A) that is arranged within or parallel to the plane and is configured to separate the at least one composition preparation unit (30) from the construction chamber (10) as a result of rotation,
**in that** the opening (12) in the upper closure plane (11) is not closed by the discharge nozzle (41) when the at least one composition preparation unit (30) is in a rest position in which the at least one composition preparation unit (30) is in a relative 0-degree position, which is any desired angular position from which all other positions adopt a position at an angle thereto, and
**in that** the opening (12) in the upper closure plane (11) is at least partly closed by the discharge nozzle (41) when the at least one composition preparation unit (30) is in a working position different from the relative 0-degree position of the rest position.

2. A device according to Claim 1, **characterised in that** it has a conveying unit (50) that is detachably secured by a clamping device (60) and is configured to plasticise a composition that is preferably in solid form.

3. A device according to Claim 1 or 2, **characterised in that** the discharge unit (40) is mounted to be rotatable about a second axis (B) that is arranged within or parallel to the plane.

4. A device according to one of the preceding claims, **characterised in that** the at least one composition preparation unit (30) has a force-measuring device (70) that is arranged in an effective line of an axial force.

5. A device according to one of the preceding claims, **characterised in that** a material discharge point (42) of the discharge nozzle (41) is arranged in a manner fixed at a predetermined x-y-z position in space in or on the construction chamber (10) when the at least one material preparation unit (30) is in the working position.

6. A device according to Claim 5, **characterised in that** the predetermined x-y-z position in space of the material discharge point (42) when the at least one composition preparation unit (30) is moved from the rest position into the working position is controllable by a reproducible position control.

7. A device according to Claim 6, **characterised in that** the position control is configured to control the x-y-z position in space using a fixed mechanical abutment (43) as a reference point, or to control the x-y-z position in space exclusively using a drive controller in conjunction with a drive for moving the at least one composition preparation unit (30).

8. A device according to one of the preceding claims, **characterised in that** a process-related change in the length of one or more parts of the at least one composition preparation unit (30) as a result of thermal and/or elastostatic effects is compensatable by a floating mounting of the part or parts.

9. A device according to one of the preceding claims, **characterised in that** if a plurality of composition preparation units (30) is arranged next to one another, their discharge nozzles (41) are at spacings that are minimised relative to one another.

10. A device according to one of the preceding claims, **characterised in that** the device (1) comprises a plurality of closed three-dimensional construction chambers (10).

11. A device according to one of the preceding claims, **characterised in that** the closed three-dimensional construction chamber (10) comprises a plurality of article supports (20).

12. A device according to one of the preceding claims, **characterised in that** a plurality of composition preparation units (30) is provided that are configured to discharge plasticised composition onto the article support or supports (20) simultaneously or with a time offset.

## Revendications

1. Dispositif (1) pour la fabrication d'au moins un objet tridimensionnel à partir d'une masse plastifiable et/ou durcissable, comprenant
- un espace de fabrication tridimensionnel fermé (10) avec des axes de coordonnées x et y s'étendant dans un plan ainsi qu'un axe de coordonnées z s'étendant dans une direction à 90 degrés par rapport au plan, pour la fabrication de l'objet, comprenant un porte-objet (20) disposé à l'intérieur et mobile librement,
- au moins une unité de préparation de masse (30), comprenant une unité d'application (40), qui est prévue pour l'application de la masse plastifiée,
dans lequel l'unité de préparation de masse (30) est disposée au moins partiellement au-dessus de l'espace de fabrication (10),
dans lequel l'espace de fabrication fermé (10) présente un développement spatial tridimensionnel et, dans un plan de fermeture supérieur (11), au moins une ouverture (12) qui peut être fermée au moins partiellement par au moins une buse d'application (41) de l'unité d'application (40),
**caractérisé en ce que**
le porte-objet (20) est aussi libre en rotation,
**en ce que** la ou les unité(s) de préparation de masse (30) est(sont) montée(s) tournante(s) au moins autour d'un premier axe (A) qui est disposé dans ou parallèlement au plan et est(sont) configurée(s) pour séparer la ou les unité(s)de préparation de masse (30) de l'espace de fabrication (10) au moyen d'une rotation,
**en ce que** l'ouverture (12) du plan de fermeture supérieur (11) n'est pas fermée par la buse d'application (41) lorsque la ou les unités de préparation de masse (30) est(sont) dans une position de repos dans laquelle la ou les unité(s) de préparation de masse (30) est(sont) dans une position à 0 degré relatif, dans laquelle il s'agit d'une position angulaire quelconque à partir de laquelle toutes les autres positions prennent une position formant un angle avec elle, et
**en ce que** l'ouverture (12) du plan de fermeture supérieur (11) est fermée par la buse d'application (41) au moins partiellement lorsque la ou les unité(s) de préparation de masse (30) est(sont) dans une position de travail s'écartant de la position à 0 degré relatif de la position de repos.

2. Dispositif selon la revendication 1, **caractérisé en ce qu'**il présente une unité d'alimentation (50) qui est fixée de manière amovible au moyen d'un dispositif de tension (60) et qui est prévue pour la plastification d'une masse se trouvant de préférence sous forme solide.

3. Dispositif selon la revendication 1 ou 2, **caractérisé en ce que** l'unité d'application (40) est montée tournante autour d'un deuxième axe (B), qui est disposé dans ou parallèlement au plan.

4. Dispositif selon l'une des revendications précédentes, **caractérisé en ce que** la ou les unité(s) de préparation de masse (30) présente(nt) un appareil de mesure de force (70) qui est disposé dans une ligne d'action d'une force axiale.

5. Dispositif selon l'une des revendications précédentes, **caractérisé en ce qu'**un point d'application de matériau (42) de la buse d'application (41) est disposé fixement à une position dans l'espace x-y-z prédéterminée dans ou au niveau de l'espace de fabrication (10), lorsque la ou les unité(s) de préparation de matériau (30) est(sont) dans la position de travail.

6. Dispositif selon la revendication 5, **caractérisé en ce que** la position dans l'espace x-y-z prédéterminée du point d'application de matériau (42) peut être pilotée lors d'un déplacement de la ou des unité(s) de préparation de masse (30) de la position de repos à la position de travail au moyen d'un réglage de position reproductible.

7. Dispositif selon la revendication 6, **caractérisé en ce que** le réglage de position est prévu pour exécuter le pilotage de la position dans l'espace x-y-z au moyen d'une butée mécanique fixe (43) en tant que point de référence, ou pour exécuter le pilotage de la position dans l'espace x-y-z exclusivement au moyen d'une commande d'entraînement en relation avec un mécanisme d'entraînement pour le déplacement de la ou des unité(s) de préparation de masse (30).

8. Dispositif selon l'une des revendications précédentes, **caractérisé en ce qu'**une modification de la longueur d'une ou de plusieurs pièce(s) de la ou des unité(s) de préparation de masse (30) liée au processus en raison d'effets thermiques et/ou élasto-statiques peut être compensée par un montage pivotant de la ou des pièce(s).

9. Dispositif selon l'une des revendications précédentes, **caractérisé en ce qu'**en cas de disposition de plusieurs unités de préparation de masse (30) les unes à côté des autres, leurs buses d'application (41) présentent des distances minimisées les unes par rapport aux autres.

10. Dispositif selon l'une des revendications précédentes, **caractérisé en ce que** le dispositif (1) comprend plusieurs espaces de fabrication tridimensionnels fermés (10).

11. Dispositif selon l'une des revendications précédentes, **caractérisé en ce que** l'espace de fabrication tridimensionnel fermé (10) comprend plusieurs porte-objet (20).

12. Dispositif selon l'une des revendications précédentes, **caractérisé en ce que** plusieurs unités de préparation de masse (30) sont prévues et équipées pour appliquer simultanément ou successivement la masse plastifiée sur le ou les porte-objet (20).
